# EUROPEAN PATENT APPLICATION

(11) **EP 0 727 403 A1**
(43) Date of publication of application: **21.08.1996**
(21) Application number: 96300810.7
(22) Date of filing: 07.02.1996
(51) Int. Cl.: C06D 5/00, B64G 1/42, C06B 47/08

(54) **Inverse hybrid propulsion system**

(30) Priority: 09.02.1995 IL 11259295
(71) Applicant: STATE OF ISRAEL, MINISTRY OF DEFENCE, RAFAEL-ARMAMENTS DEVELOPMENT AUTHORITY, Haifa 31021 (IL)
(72) Inventor: Peretz, Arie, Haifa 34463 (IL); Miller, Nehemia, Haifa 34987 (IL)
(74) Representative: West, Alan Harry

(57) **Abstract**

A chemical inverse-hybrid propulsion system is characterized by a propellant which comprises hydrazine as a fuel and a solid oxidant.

## Description

This invention relates to an inverse-hybrid chemical propulsion system employing a liquid fuel and a solid oxidizer, with thrust modulation and stop-restart capability. A typical application example of the said system is as on-board spacecraft propulsion unit, which is able to perform various velocity-increment or ΔV functions, such as orbital insertion, attitude and orbit control (hereinafter AOC), spacecraft maneuvering, drag compensation and deorbit.

A variety of space propulsion functions requiring a velocity-increment action, such as perigee and apogee boost, station keeping, AOC and satellite maneuvering, are performed with advanced earth-storable, mono- or bipropellant propulsion systems using the so-called dual-mode or unified propulsion concepts, as described, e.g., by Schöyer, H.F.R. in "Some New European Developments in Chemical Propulsion", ESA Bulletin, No. 66, May 1991, pp. 54-63.

In the former concept, numerous monopropellant hydrazine catalytic thrusters are used for station-keeping and AOC, while hydrazine from the same source is burned as a fuel, with a liquid oxidizer, typically mixed oxides of nitrogen (hereinafter MON), or nitrogen tetroxide (hereinafter NTO) in a bipropellant orbit-insertion or orbit-transfer engine, such as an apogee kick motor (hereinafter AKM). In the unified propulsion concept, the same liquid fuel, typically monomethyl hydrazine (hereinafter MMH) and liquid oxidizer (MON or NTO) are burned in both the AOC low-thrust bipropellant thrusters and the orbit-insertion or orbit-transfer engine.

In both the above-mentioned operation modes of space propulsion systems, a large amount of tubes, valves, plumbing and a complex regulating set-up are involved, due to the necessity of using a double propellant tankage and supply system, caused by the need of two different fluids composing the propellant, which leads to highly undesirable structural complications, decreased injected-spacecraft mass fractions, and reduced reliability of proper functioning.

The present invention relates to a new high density-impulse hybrid-propellant system which uses hydrazine as a fuel and can be used as a part of a dual-mode spacecraft propulsion system, which thereby operates in a more efficient, simple, and reliable way.

Inverse-hybrid propellant systems, comprising a solid oxidizer and a liquid- or injectant-phase fuel, have been known in the art for some time. Such systems are disclosed in, e.g., US Patent 3,640,070, which describes the use of hydrazine as the liquid phase or a component thereof, and the combination of a fluorocarbon binder and an inorganic oxidizer such as ammonium perchlorate (hereinafter AP), with the addition of a metal fuel, particularly aluminum, as the solid phase.

A common parameter for the evaluation of the performance of a propulsion system is the provided specific impulse, usually indicated by the symbol Isp, which has, conventionally, the dimension of time or velocity, and is therefore measured in seconds (s) or meters per second (m/s). For instance, the aforementioned U.S. Patent discloses Isp values of up to 263 s and 280 s when using aluminum or beryllium as a metal-fuel additive, respectively. However, a still more important parameter, especially for volume-limited systems, is the density impulse, viz. the specific impulse per unit volume, which is equal to the product of the specific impulse and the propellant density, ρIsp, measured in g-s/cm³. Bipropellants used in the aforementioned dual-mode or unified propulsion systems have density impulse values that approach, but do not reach, 400 g-s/cm³ for a frozen-composition expansion to vacuum: thus, for a hydrazine-MON-3 or MMH-MON-3 combination with expansion ratio of 60, the typical ρIsp values are 389 and 373 g-s/cm³, respectively.

It is the purpose of the present invention to provide such propellants for orbital insertion, orbital transfer, AOC, spacecraft maneuvering, drag compensation and deorbit systems, that generate increased density impulses.

It is another purpose of the invention to provide such propellants for the aforementioned missions, that generate density impulses in excess of 420 g-s/cm³ at the above-mentioned conditions.

It is a further purpose of the invention to provide such propellants, generating increased density impulses, that can use fuel, available in the spacecraft as a propellant for monopropellant thrusters in attitude control systems (hereinafter ACS).

It is a still further purpose of the invention to provide more efficient utilization of the monopropellant available on board, thus prolonging the useful life of the spacecraft.

It is a still further purpose of the invention to provide a chemical propulsion system with a hypergolic ignition capability, which does not need an igniter for the start of operation, thus simplifying the system and increasing its reliability.

It is a still further purpose of the invention to provide a propulsion system with a stop-restart capability.

It is a still further purpose of the invention to provide a simpler propellant feed system with a lesser amount of valves and plumbing, as compared to a unified propulsion unit, since only one liquid/gas component is fed to the engine combustion chamber.

Other purposes and advantages of the invention will appear as the description proceeds.

The propulsion system according to the invention is characterized by a propellant which comprises hydrazine as a fuel and a solid oxidant.

Preferred solid oxidants are mixtures of ammonium perchlorate (NH₄ClO₄, hereinafter AP) and potassium perchlorate (KClO₄, hereinafter KP). These mixtures are more preferably consolidated into a centrally perforated solid grain, using Viton A, which is a copolymer of vinylidene fluoride and perfluoroethylene, serving as a high-density binder.

The hydrazine fuel undergoes an exothermic or thermal decomposition in a specially designed chamber. When a catalyst is used, a typical such catalyst is an iridium coating on an aluminum oxide carrier bed, situated in the decomposition chamber.

In another preferred form of the invention, a solid metal fuel, particularly magnesium or aluminum, is added to the solid oxidant in the form of finely dispersed particles.

Another object of the invention is a propulsion method which comprises the steps of feeding hydrazine into a decomposition chamber, whereby to cause it to dissociate, and feeding the hot combustible gases, produced in the exothermic dissociation, into a combustion chamber onto a solid oxidant grain, optionally containing a solid fuel component, whereby to increase by combustion the thrust produced by them. Typically, the decomposition chamber contains a catalyst bed to cause catalytic dissociation, or an electrically heated bed to cause thermal dissociation.

The invention includes a mixed dual-mode propulsion system, wherein the aforesaid propulsion method is used for ΔV-functions, such as orbit insertion or transfer, while a monopropellant propulsion system, wherein hydrazine from the same source is the single propellant, is used in AOC engines.

The invention further includes a new engine for spacecraft propulsion, which is characterized in that it comprises a decomposition chamber, a combustion chamber, containing a solid propellant phase made of oxidant components, means for feeding a dissociable liquid fuel, particularly hydrazine, into said decomposition chamber, and means for feeding the gaseous dissociation products thus generated, which are combustible, into said combustion chamber, whereby to contact them with said solid propellant phase and boost by combustion the thrust produced by them. Typically, said decomposition chamber contains a catalyst or electrically heated bed and the hydrazine is fed onto said bed for catalytic or electrothermal dissociation.

The invention further comprises a dual-mode propulsion system for spacecraft, including the aforesaid inverse hybrid engine for orbit-insertion and orbit-transfer propulsion, and a plurality of AOC monopropellant engines, wherein the propellant is the aforesaid catalytically dissociatable liquid fuel.

In the drawings:
- Fig. 1 is a schematic longitudinal cross-section of an experimental inverse-hybrid engine according to an embodiment of the invention;
- Fig. 2 diagramatically illustrates a spacecraft propulsion system according to an embodiment of the invention; and
- Figs. 3 and 4 are graphs, illustrating the performance of propellant systems according to preferred embodiments of the invention.

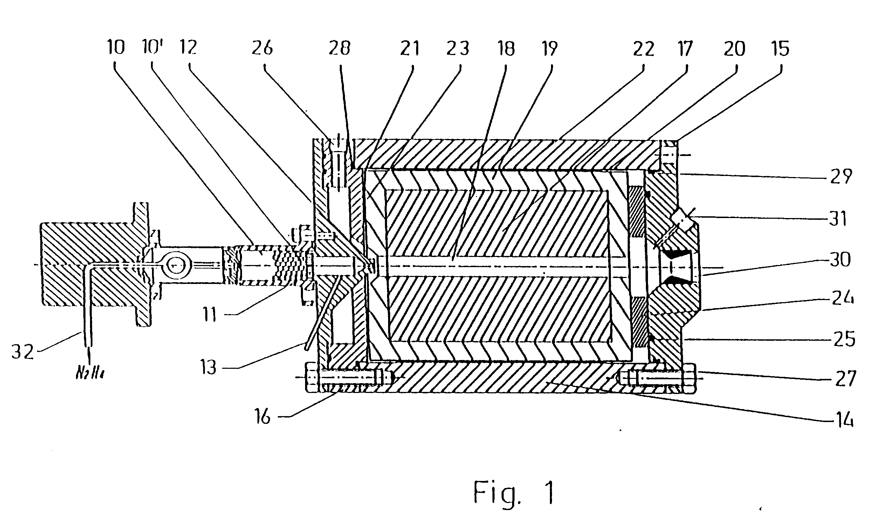

With reference now to Fig. 1, in the inverse-hybrid engine, according to an embodiment of the invention, numeral 10 generally indicates the catalytic or electrothermal hydrazine decomposition chamber part of the inverse-hybrid engine, viz. the part in which the liquid hydrazine is conventionally fed through an injector head and is exothermally dissociated into gaseous products. In the embodiment described, said decomposition chamber contains a catalyst bed 10'. The gaseous dissociation products, which are essentially nitrogen, hydrogen and ammonia, e.g., in mole fractions of 29% N₂, 46% H₂ and 25% NH₃, pass at a temperature, corresponding to the example, of 1236 K, through a screen 11 and a choked nozzle 12, into the combustion chamber.

Numeral 13 indicates a tube, by means of which the pressure at the entrance to the nozzle of the experimental engine is measured. The combustion chamber is enclosed by a cylindrical metal casing 14, an aft-end closure 15, and a fore-end bulkhead subassembly 16. The cylindrical solid oxidant grain 17 has a central perforation 18. Alternatively, several perforations with cylindrical or non-cylindrical configuration can be used. All the outer surfaces of the grain, except for the perforation, are inhibited from heating and burning by a layer of inhibitor 19, made of, e.g., HTPB polymer filled with 30 to 40% carbon black. The oxidant grain 17, with its inhibitor 19, is free-standing in the combustion chamber casing 14, i.e. gaps 20 and 21 exist between the outer surface of inhibitor envelope 19 and the inner surface of the casing 14 and bulkhead 16, respectively. Several longitudinal elastomer strips 22, bonded to the outer surface of the inhibitor 19, provide the central location of the grain in the casing 14. Several radial elastomer strips 23, bonded to the fore-end surface of the inhibitor 19, provide passage of the gases from the perforation 18 to the circumferential gap 20. An elastomer ring 24, bonded to the aft-end side of the inhibitor 19, leans against the O-ring seal 25, situated in the closure 15. In this way, during operation, the oxidant grain is pressurized from all sides to minimize stresses and strains. In the said experimental system. the fore-end bulkhead sub-assembly has a threaded opening 26 for N₂ or CO₂ purge. The bulkhead and the aft closure are bolted to the casing by screws 27, and the combustion chamber is sealed by the O-rings 28 and 29.

The hydrazine decomposition gases entering the passage 18 through the nozzle 12, transfer heat to the oxidant grain, causing its decomposition, while liberating oxidizing species which react with the hydrazine decomposition gases, thus increasing their temperature and energy. The final combustion gases expand and exhaust through the nozzle 30 to create useful thrust. A tap 31 is provided at the nozzle entrance for pressure measurements. The hydrazine is fed to the decomposition chamber through the conduit 32.

In the embodiment described, the solid phase is constituted by a mixture of AP and KP, the fraction of KP being between 10 and 30%. The AP particle size is bimodal, whereas that of the KP is unimodal, with such fractions as to obtain high volumetric loading. All particles are coated with Viton A, with a total mass fraction of 7 to 10% of the whole mixture. Viton A serves as a high-density binder in the consolidation process, and also as an additional oxidant. If a solid metal fuel, e.g., aluminum, is included in the solid phase, it is in the amount of from 10 to 30%. The isostatic consolidation of the oxidant mixture is performed in a special device at high pressure and temperature, typically 207 MPa (30,000 psi) and 90°C, respectively. 96% to 98% of the theoretical maximum density (TMD) has been obtained at those conditions.

When heated by the hot hydrazine decomposition gases (on ignition), and later under the effect of heat feedback from the combustion close to the surface. the solid oxidant releases oxidizing species, such as Cl₂ and O₂, besides other decomposition products, such as N₂O, HCl, KCl, N₂ and H₂O. Those oxidizing species react with the hydrogen and the ammonia in the hydrazine decomposition products to raise the temperature of the final combustion products above 2500°C.

The theoretical maximum specific (gravimetric) and density-specific (volumetric) impulses obtainable by a propellant system as described are shown in the attached Table I, wherein the theoretical performance of conventional bipropellant systems MMH-MON-3 (unified concept) and N₂H₄-MON-3 (dual-mode concept) is compared with that of two propellant systems according to the invention: N₂H₄-AP/KP/Viton (in oxidizer mass fractions of 72/18/10%), and N₂H₄-AP/KP/Al/Viton (in oxidizer mass fractions of 57·6/14·4/20·0/8·0%). The bulk density of the consolidated solid phase is taken as 97% of TMD.

The theoretical values are calculated for operation in vacuum at a combustion pressure of 0.6 MPa (87 psia) with a nozzle expansion ratio of 60. They are presented for two cases: a frozen expansion in the nozzle, in which it is assumed that the expansion takes place at an unchanged ("frozen") composition of the combustion products, and an equilibrium (shifting) expansion in the nozzle, in which it is assumed that the composition of the combustion products shifts during the expansion in accordance with the local pressure and temperature conditions. The bulk densities given are those corresponding to the oxidant to fuel ratio, which provides the presented maximum specific impulse at the aforementioned conditions. It can be seen that, while this invention does not increase Isp, it does provide a considerable increase in the more significant performance parameter for volume-limited systems, the volumetric or density impulse ρIsp.

**Table I**

| **Propellant Combination** | **FROZEN EXPANSION** | | | **EQUILIBRIUM EXPANSION** | | |
|---|---|---|---|---|---|---|
| | **Bulk density ρ(g/cm**^{**3**}**)** | **Specific Impulse I**_{**sp**}**(s)** | **Density Specific Impulse ρI**_{**sp**}**(g-s/cm**^{**3**}**)** | **Bulk density ρ(g/cm**^{**3**}**)** | **Specific Impulse I**_{**sp**}**(s)** | **Density Specific Impulse ρI**_{**sp**}**(g-s/cm**^{**3**}**)** |
| MMH-MON-3 | 1·17 | 319·1 | 373·3 | 1·22 | 345·0 | 420·9 |
| N₂H₄-MON-3 | 1·19 | 326·8 | 388·9 | 1·23 | 348·0 | 428·0 |
| AP/KP/V-N₂H₄ | 1·54 | 288·7 | 444·6 | 1·63 | 299·5 | 488·2 |
| AP/KP/Al/V-N₂H₄ | 1·51 | 313·0 | 472·6 | 1·64 | 327·9 | 537·8 |

It can be seen from Table I that for the case of frozen-composition expansion, for example, the AP/KP/V-N₂H₄ and AP/KP/Al/V-N₂H₄ propellant systems have ρIₛₚ values higher by 19.1% and 26.6% than the MMH-MON-3 system, respectively.

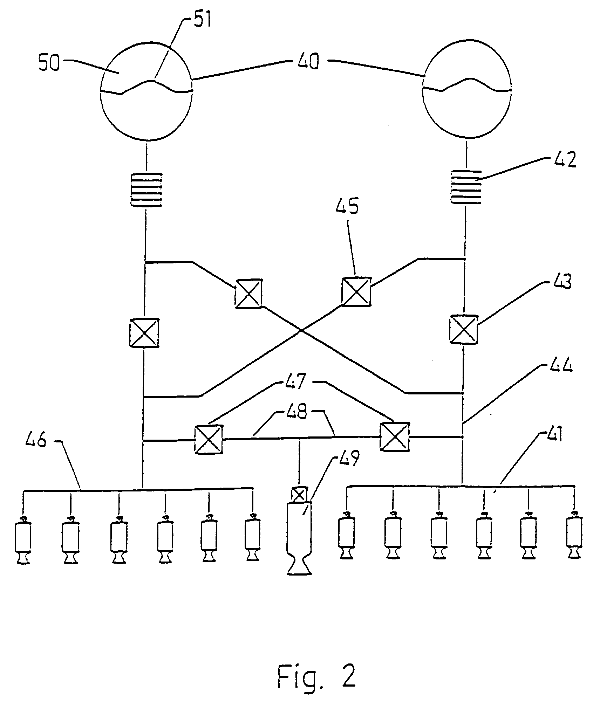

Fig. 2 schematically illustrates an entire propulsion system of a spacecraft, as an example of possible application of the invention to space propulsion. Numeral 40 indicates two spherical hydrazine tanks in a typical configuration. The hydrazine is pressure-fed by a pressurant gas, e.g., nitrogen or helium to, typically, six AOC thrusters of the known monopropellant type, schematically indicated at 41, passing through the filter 42, the latch valve 43, and the pipeline 44. Redundancy is obtained by an additional set of 6 AOC thrusters 46, which can be isolated from or connected to the hydrazine tanks by the latch valves 43 and 45. Hydrazine can also be fed through the redundant latch valve 47 and pipeline 48 to an inverse hybrid engine as proposed in the invention, generally indicated at 49, and which may be as illustrated in Fig. 1. The propulsion system includes also a fill and vent valve for the pressurant, as well as fill and drain valve for the hydrazine (not shown in Fig. 2) for each of the hydrazine tanks. In a typical configuration, pressurant in the tank ullage 50 provides positive expulsion of the hydrazine by an elastomeric diaphragm 51 in the blow-down mode of operation. Alternatively, other modes of hydrazine expulsion can be used.

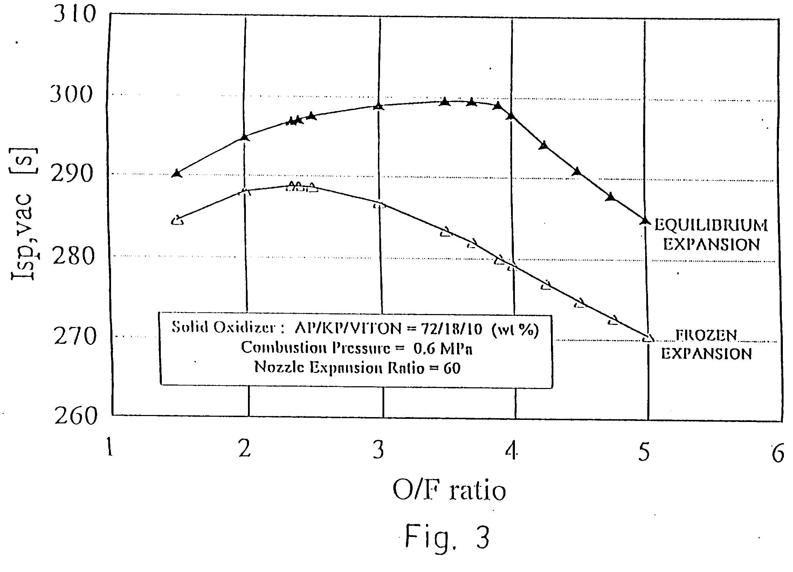

Fig. 3 illustrates the dependence of the specific impulse of the AP/KP/Viton-N₂H₄ propellant system (in oxidizer mass fractions of 72/18/10%) on the oxidizer/fuel (O/F) ratio for a frozen and equilibrium expansion to vacuum with a nozzle expansion ratio of 60. The O/F mass ratio varies from 1.5 to 5. In actual performance, an intermediate situation between frozen- and equilibrium (shifting)-composition expansion is reached.

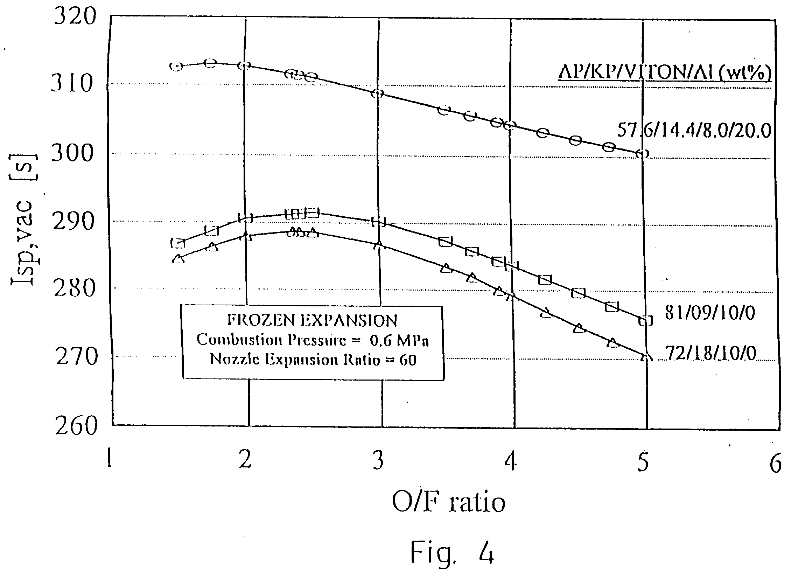

In Fig. 4. the relationship between the specific impulse and the O/F mass ratio is illustrated for three different compositions of the solid phase, as shown, for frozen-composition expansion to vacuum. It should be emphasized that Isp does not much change over a wide range of O/F ratio values in the vicinity of the maximum Isp, especially for metal-containing compositions, as shown in Fig. 4. This is very desirable and attractive, because it means that variations in the O/F ratio during operation will not significantly affect the engine performance.

Typical test data, obtained from a ground firing of a 5N hydrazine thruster and a solid-phase oxidizer grain composed of 72 wt% AP, 18 wt/% KP and 10 wt/% Viton A, in the configuration shown in Fig. 1, provided an effective (delivered) c-star value of 1,503 m/s for an O/F ratio of 3.23. This means a combustion efficiency η_{c} (defined as the ratio of effective to theoretical c-star), of 98.6% for that O/F ratio. c-star is a measure (figure of merit) of the chemical energy released in the combustion process in a rocket-engine combustion chamber. The stop-restart capability of the system has been proven experimentally by multiple test firings.

## Claims

1. A chemical inverse-hybrid propulsion system, characterized by a propellant which comprises hydrazine as a fuel and a solid oxidant.

2. Propulsion system according to claim 1, wherein the solid oxidant is a mixture of ammonium perchlorate and potassium perchlorate.

3. Propulsion system according to claim 1, wherein the mixture contains from 10 to 30% of potassium perchlorate.

4. Propulsion system according to claim 1 or 2, wherein the solid oxidant is consolidated into a centrally or otherwise perforated solid grain, using Viton A to coat the solid-oxidant particles and serve as a high-density binder.

5. Propulsion system according to claim 1, further comprising a hydrazine decomposition chamber.

6. Propulsion system according to claim 1, further comprising a solid metal fuel added to the solid oxidant in the form of finely dispersed particles.

7. Propulsion system according to claim 1 or 2, wherein the metal fuel is magnesium or aluminum.

8. Propulsion system according to claim 4, wherein the centrally or otherwise perforated solid grain is protected from burning at its outer surfaces by an inhibitor.

9. Chemical propulsion method, which comprises the steps of feeding hydrazine into a decomposition chamber, whereby to cause it to dissociate, and feeding the hot combustible gases, produced in the exothermic dissociation, into a combustion chamber onto a solid oxidant grain, whereby to increase by combustion the thrust produced by them.

10. Propulsion method according to claim 9, wherein the solid oxidant grain contains a solid fuel component.

11. Propulsion method according to claim 9, wherein the decomposition chamber contains a catalytic or electrically heated bed.

12. Mixed dual-mode propulsion system, using the propulsion method according to claims 9 to 11 for ΔV-functions, such as orbit insertion, orbit transfer, spacecraft maneuvering, drag compensation and deorbit, and a monopropellant propulsion system, wherein hydrazine from the same source is the single propellant in AOC engines.

13. Engine for chemical rocket propulsion, characterized in that it comprises a decomposition chamber, a combustion chamber containing a solid propellant phase made of oxidant components, means for feeding a dissociable liquid fuel, into said decomposition chamber, and means for feeding the gaseous dissociation products, thus generated, into said combustion chamber, whereby to contact them with said solid propellant phase.

14. Engine for chemical rocket propulsion according to claim 13, wherein the combustion chamber is defined by a cylindrical casing having fore and aft closures and means for suspending therein the solid propellant phase.

15. Engine for chemical rocket propulsion according to claim 13, wherein the decomposition chamber contains a catalytic or electrically heated bed and means are provided for feeding the dissociable liquid fuel onto said bed.

16. Dual-mode propulsion apparatus for spacecraft, comprising an engine according to claim 11 or 12 for orbit-insertion and orbit-transfer propulsion, and a plurality of AOC monopropellant engines, wherein the propellant is the dissociable liquid fuel.
